# EUROPÄISCHE PATENTANMELDUNG

(11) **EP 0 767 096 A1**
(43) Veröffentlichungstag der Anmeldung: **09.04.1997**
(21) Anmeldenummer: 96810625.2
(22) Anmeldetag: 23.09.1996
(51) Int. Cl.: B61D 17/04, B62D 33/04

(54) **Baugruppe mit insbesondere stranggepressten Hohlprofilen für Wagenaufbauten**

(30) Priorität: 02.10.1995 DE 29515619 U; 04.11.1995 DE 29517513 U; 07.12.1995 DE 29519372 U
(71) Anmelder: Alusuisse Technology & Management AG (Alusuisse Technology & Management SA) (Alusuisse Technology & Management Ltd.), 8212 Neuhausen am Rheinfall (CH)
(72) Erfinder: Waldeck, Klaus-Dieter, 8954 Geroldswiel (CH)

(57) **Zusammenfassung**

Baugruppe für Wagenaufbauten mit wenigstens zwei parallel zueinander zusammengefügten Anschlussprofilen, insbesondere mit stranggepressten Hohlprofilen. Bei der Baugruppe sind die beiden Anschlussprofile (10,12) durch Paare von mittels Schrauben (42) kraftschlüssig verbundenen Nutensteinen (24) oder Längsschienen (25, 25ₙ) aneinander festgelegt, wobei jeder Nutenstein oder jede Längsschiene Anschlagflächen (20) beider Anschlussprofile anliegt.

## Beschreibung

Die Erfindung betrifft eine Baugruppe mit wenigstens zwei etwa parallel zueinander zusammengefügten Anschlußprofilen, insbesondere mit stranggepreßten Hohlprofilen für Wagenaufbauten.

Bei modernen Großfahrzeugen sucht man Wege zur möglichst weitgehenden Vorfertigung einbaufertiger Baugruppen beispielsweise für Seitenwände, Dach od.dgl. Die Verbindung dieser Baugruppen erfolgt in der Regel durch Schweißen mit der bekannten Folge thermisch bedingter Verzüge, die anschließend gerichtet werden müssen. Zudem können Oberflächenbeschädigungen entstehen, welche eine vorgängige Oberflächenbehandlung ausschließen. Einige Hersteller schrauben aus diesem Grunde die Bauelemente an den Trennstellen zusammen. Das Abdichten der Anschlußstellen erfolgt bei den beschriebenen Fertigungsgängen gesondert.

Angesichts dieser Gegebenheiten hat sich der Erfinder das Ziel gesetzt, die Fertigung der eingangs umrissenen Baugruppen zu verbessern und eine Verbindung anzubieten, mit der in Modulbauweise vorrüstbare Baugruppen ohne Richtaufwand einfach und kostengünstig zusammengefügt werden können. Zudem soll eine vorgängige Oberflächenbehandlung von Teilen der Baugruppe möglich werden.

Zur Lösung dieser Aufgabe führt die Lehre des unabhängigen. Anspruches; die Unteransprüche geben günstige Weiterbildungen an.

Erfindunqsgemaß sind die beiden Anschlußprofile durch Paare von -- mittels Schrauben kraftschlüssig verbundenen -- Nutensteinen oder Längsschienen aneinander festgelegt, wobei jeder Nutenstein oder jede Längsschiene Anschlagflächen beider Anschlußprofile anliegt; das Paar von Nutensteinen bzw. Längsschienen soll mit beiden Anschlußprofilen formschlüssig verbunden sein.

Die Anschlußprofile sind bevorzugt stranggepreßte Hohlprofile, die auch Anbauteil einer mehrschichtigen Verbundplatte -- vor allem als Randabschluß -- sein können. Solche Verbundplatten mögen aus einer Basis- und einer Deckschicht, aus einer Kernschicht und zwei diese beidseits abdeckenden Deckschichten oder aus vier und mehr Schichten bestehen. Die Deckschichten können aus -- insbesondere armierten -- Kunststoffen oder aus Metall geformt sein. Als Kunststoffe dienen z.B. Polyester, Epoxydharze, Polyolefine oder Polyamide, als Metallschichten solche aus Stahl, Eisen oder Aluminium. Für jene Basis oder Kernschicht wird vorteilhafterweise ein Stegmaterial aus Metall oder Kunststoff in Waben- oder Zellenform eingesetzt oder ein Strecknetall. Auch ist es denkbar, die Basis- oder Kernschicht aus Schaumstoffmaterial herzustellen, dessen Zellstruktur offenzellig, geschlossenzellig oder gemischtzellig sein kann.

Die beiden durch die Schrauben abstandsveränderlich verbundenen Nutensteinen bzw. Längsschienen ergreifen zangenartig gleichzeitig beide Anschlußprofile und halten sie -- in einem durch die Form der Nutensteine bzw. Längsschienen bestimmten Abstand -- aneinander. Dazu hintergreifen nach einem anderen Merkmal der Erfindung die Nutensteine bzw. Längsschienen die Anschlagflächen der Anschlußprofile hakenähnlich.

Als gunstig hat es sich erwiesen, daß die beiden Nutensteine bzw. Langsschienen zwischen sich beidseits der Schraube/n jeweils einen hinterschnittenen Einsatzraum für einen Einsatzabschnitt eines der Anschlußprofile begrenzen; die Breite des Einsatzraumes ist der gewünschten Anpassbarkeit halber veränderlich.

Um den Formschluß zu verbessern, ist der Einsatzraum seitlich von geneigten Innenflächen der beiden Nutensteine bzw. Längsschienen begrenzt und nahe der Schraube/n von zu dieser/diesen etwa parallelen Anschlagstegen; letztere stellen den Boden jenes Einsatzraumes dar und dienen zur Führung des erwähnten Einsatzabschnittes des entsprechenden Anschlußprofils.

Da die Nutensteine bzw. Längsschienen jeweils einstückig hergestellt sind, werden die Anschlußstege beidseits der Durchsteckbohrung/en und/oder der Gewindebohrung/en aus dem Kopf des Nutensteins Dzw. dem Körper der Längsschiene herausgeformt.

Der in diesem Einsatzraum unterzubringende Einsatzabschnitt des Anschlußprofils ist eine sich zu ihrer Oberfläche hin querschnittlich beidseits verbreiternde Leiste, die kammartig aus dem Anschlußprofil herausgeformt ist.

Nach einem anderen Merkmal der Erfindung ist zumindest die mit den Durchsteckbohrungen versehene Längsschiene in deren Bereich mit einer äußeren Längsnut od.dgl. Kanal versehen. Die Nutenbreite entspricht vorteilhafterweise etwa der Breite der Schraubenköpfe.

In die Längsnut der Längsschiene wird erfindungsgemäß ein streifenartiger Strang oder ein entsprechendes Zusatzprofil eingelegt, sei es zur Abdeckung der Schraubenstirnen, sei es zum schnellen Einsetzen der dann am Zusatzprofil festliegenden Schrauben.

Bei einer anderen Ausgestaltung dient die Langsnut der Langsschiene zur Aufnahme von Kabeln, Leitungen od. dgl. Stränge; in diesem Falle sind die Köpfe der Schrauben versenkt, insbesondere in einem ihrem Umriß entsprechenden Aufnahmeraum im Nutengrund angeordnet.

Die im Gegensatz zu thermischen Schweißverfahren als Kaltverbindung zu bezeichnende Anordnung enthält also in bevorzugter Ausgestaltung zwei durch Schrauben od.dgl. miteinander verbundene, an den Kanten hakenförmig ausgebildete Nutensteine oder querschnittlich entsprechende Längsschienen; deren Haken können in hakenförmige Partner an den Anschluß- oder Großprofilen der Baugruppe eingreifen.

Sowohl die Längsschienen als auch die Gegenstücke können aus Aluminium, Stahl oder Kunststoffen bestehen und auch noch mit zusätzlichen Dichtlippen versehen werden.

Die beschriebene linienförmige Verbindung von einbaufertigen Großbaugruppen mittels der beiden miteinander verschraubten Längs- oder Klemmschienen führt zu einer stattlichen Reihe von Vorzügen, nämlich
* saubere Trennstellenabdichtung;
* gleichmäßige Übertragung der Querbiegebeanspruchungen;
* über die Klemmverbindung auch für Längsbelastungen gut dimensionierbar;
* mit anderen Abdeckschienen sowie mit Großprofilen COMPOSITE-Elementen kombinierbar;
* Baugruppen komplett (mit Fertiganstrich) produzierbar;
* geringe Toleranzempfindlichkeit;
* einfache Demontierbarkeit.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt skizzenhaft in
- Fig. 1:: einen Querschnitt durch eine Verbindungsstelle einer einbaufertigen Baugruppe aus Profilelementen;
- Fig. 2:: ein vergrößertes Detail aus Fig. 1;
- Fig. 3:: eine Schrägsicht auf eine andere Ausführungsform der Baugruppe.
- Fig. 4:: eine andere Ausgestaltung eines Details der Fig. 3 im Querschnitt.

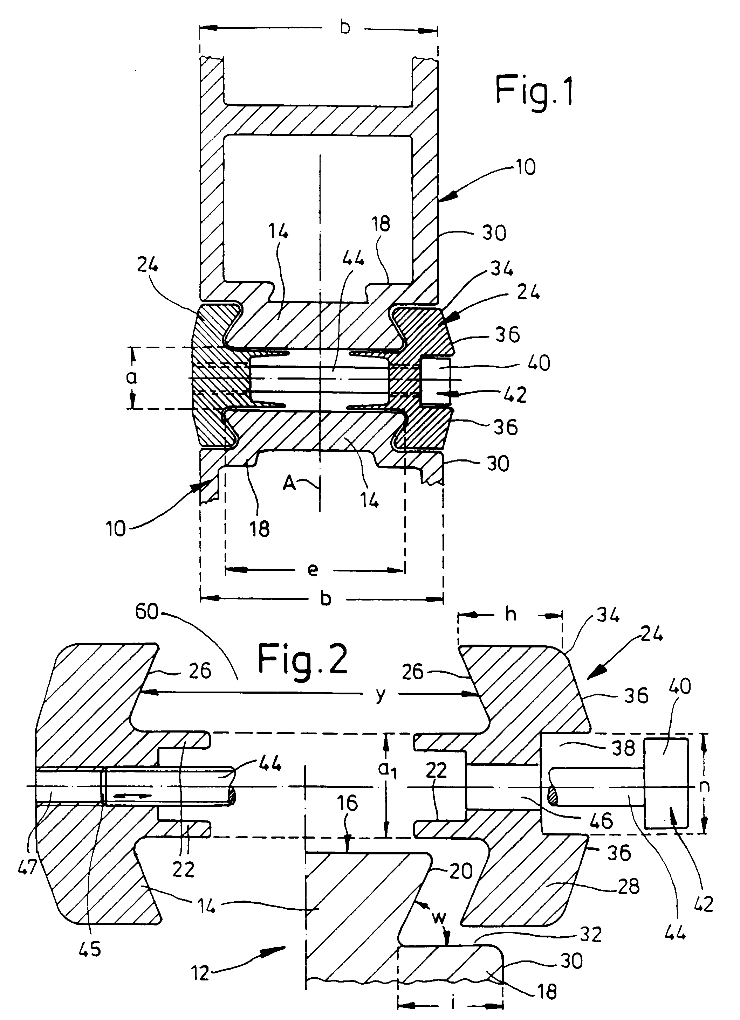

In einer Seitenwand eines aus Gründen der Übersichtlichkeit nicht weiter dargestellten Großfahrzeuges verlaufen zwei in Fig. 1 nur teilweise wiedergegebene Hohlprofile 10 in einem Abstand a übereinander. Diese Hohlprofile 10 sind aus einer Leichtmetallegierung stranggepreßt mit einer beispielsweisen äußeren Kastenbreite b von 60 mm.

Aus den einander zugekehrten Seiten beider Hohlprofile 10 ist jeweils eine kammartige Leiste 14 herausgeformt, deren Querschnitt sich von ihrer Oberfläche 16 der Standardbreite e von 40 mm zur eigentlichen Profilwand 18 hin verjüngt; es entstehen so an den im Winkel w von etwa 70° zu jener Profilwand 18 geneigten Längsflächen 20 der Leisten 14 Hinterschneidungen.

Der erwähnte Abstand a zwischen den beiden Hohlprofilen 10 wird vom äußeren Abstand a₁ zweier einander paralleler Anschlagstege 22 bestimmt, die von einem seitlich einschiebbaren Nutenstein 24 abragen, der seinerseits von einem Strangpreßprofil abgelängt und einem Anodisierungsvorgang unterzogen worden sein kann. Dessen an die Anschlagstege 22 anschließende Innenflachen 26 sind entsprechend jenen Langsflachen 20 der Leisten 14 geneigt, und die in Fig. 1 verdeutlichten beiden Nutensteine 24 schmiegen sich in Einbaustellung an die Längsflächen 20 an. Da die Dicke h des Steinkopfes 28 etwa der Breite i einer sich zwischen Längsfläche 20 und Profilseitenfläche 30 erstreckenden Profilschulter 32 entspricht, kragt der Steinkopf 28 an seinen äußeren Längskanten 34 nicht über jene Profilseitenflächen 30 hinaus.

An den Längskanten 34 setzen Außenflächen 36 des Steinkopfes 28 an, die parallel zu den beschriebenen Innenflächen 26 verlaufen und in Fig. 2 an einer Längsnut 38 des Nutensteins 24 enden. Deren Breite n entspricht hier etwa dem äußeren Abstand a₁ der Anschlagstege 22.

Die Längsnut 38 nimmt die Köpfe 40 von Stiftschrauben 42 -- M8 bis M12 -- auf, deren Schäfte 44 jeweils eine Durchsteckbohrung 46 des Nutensteins 24 durchsetzen und mit ihrem Gewindeende 45 in eine Gewindebohrung 47 eines gegenüberliegenden Nutensteins 24 eingreifen - dieser weist gemäß Fig. 1 keine Längsnut auf, kann aber bei einer nicht gezeigten Ausgestaltung auch mit einer Längsnut 38 versehen sein. Fig. 1 verdeutlicht zudem, daß die Anschlagstege 22 der Stabilisierung der anliegenden Hohlprofile 10, 12 dienlich sind.

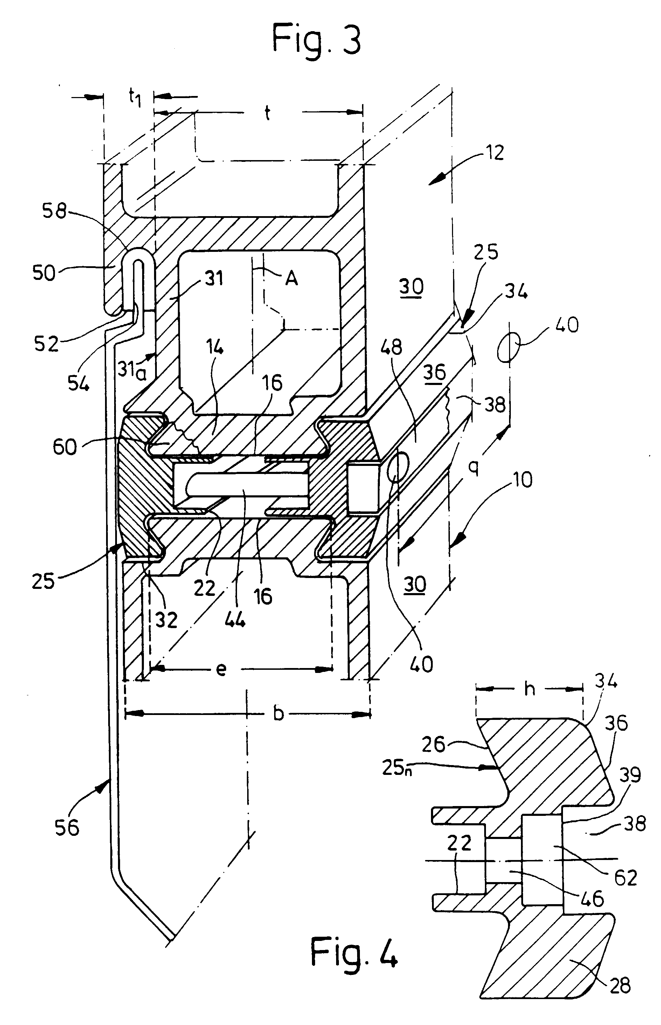

Mit Fig. 3 wird eine beispielsweise etwa 1000 mm lange Montageeinheit für einen Omnibus oder Triebwagen vorgestellt mit die Nutensteine 24 ersetzenden, die Hohlprofile 10,12 klemmend zusammenhaltenden Einschub- oder Längsschienen 25 entsprechenden Querschnitts. In deren durchlaufenden Längsnut 38 ist ein Rechteckstab als Zusatzprofil 48 für die es in Abständen q von hier 100 mm durchsetzenden Stiftschrauben 42 angeordnet.

Das obenliegende Hohlprofil 12 ist mit einer zur Querschnittsachse A hin, versetzten Seitenwand 31 versenen; ihre Außenfläche 31ₐ verläuft zur anderen Profilseitenfläche 30 in einem Abstand t von 50 mm und in einem Abstand t₁ von etwa 10 mm zur Außenfläche eines angeformten Parallelsteges 50. Dieser bildet mit der Seitenwand 31 einen sich abwärts öffnenden Rinnenraum 52, in dem eine Kröpfleiste 54 eines plattenartigen Abdeckprofils 56 lagert, welches die Nutensteine 24 bzw. die aus Leichtmetall, Stahl oder Kunststoff geformte Längs- oder Einschubschiene 25 übergreift. Jene Kröpfleiste 54 ist von einem Gummiprofil 58 umfaßt.

Auch die Ausgestaltung der Längsschiene 25ₙ nach Fig. 4 bietet eine durchlaufende Längsnut 38 an, die Kabel, Leitungen od. dgl. Stränge aufnehmen soll. In diesem Falle ruhen die -- hier nicht gezeigten -- Köpfe 40 der Stiftschrauben 42 jeweils in einem in den Nutengrund 39 zusätzlich eingeformten Aufnahmeraum 62, also außerhalb des Nutenquerschnitts.

Das Paar der einander gegenüberliegenden Nutensteine 24 bzw. Einschub- oder Längsschienen 25,25ₙ begrenzt mit seinen geneigten Innenflächen 26 und den Oberflächen der Anschlagstege 22 beidseits der Stiftschrauben 42 jeweils einen hinterschnittenen Einsatzraum 60 (Fig. 2, 3), dessen mittlere Breite y durch die Stiftschraube/n 42 verstellbar ist.

Bei einer nicht dargestellten Ausführungsform können die Längsschienen 25,25ₙ noch mit Dichtlippen versehen sein.

## Patentansprüche

1. Baugruppe mit wenigstens zwei parallel zueinander zusammengefügten Anschlußprofilen, insbesondere mit stranggepreßten Hohlprofilen für Wagenaufbauten,
dadurch gekennzeichnet,
daß die beiden Anschlußprofile (10, 12) durch Paare von mittels Schrauben (42) kraftschlüssig verbundenen Nutensteinen (24) oder Längsschienen (25, 25ₙ) aneinander festgelegt sind, wobei jeder Nutenstein oder jede Längsschiene Anschlagflächen (20) beider Anschlußprofile anliegt.

2. Baugruppe nach Anspruch 1, dadurch gekennzeichnet, daß das Paar von Nutensteinen (24) bzw. Längsschienen (25, 25ₙ) mit beiden Anschlußprofilen (10, 12) formschlüssig verbunden ist.

3. Baugruppe nach Anspruch 1 oder 2, dadurch gekennzeichnet, daß die Nutensteine (24) bzw. Längsschienen (25, 25ₙ) die Anschlagflächen (20) der Anschlußprofile (10, 12) hakenartig hintergreifen.

4. Baugruppe nach einem der Ansprüche 1 bis 3, dadurch gekennzeichnet, daß die beiden Nutensteine (24) bzw. Längsschienen (25, 25ₙ) zwischen sich beidseits der Schraube/n (42) jeweils einen hinterschnittenen Einsatzraum (60) für einen Einsatzabschnitt (14) eines der Anschlußprofile (10, 12) bilden, wobei die Breite (y) des Einsatzraumes einstellbar veränderlich ist.

5. Baugruppe nach einem der Ansprüche 1 bis 4, dadurch gekennzeichnet, daß der Einsatzraum (60) seitlich von geneigten Innenflächen (26) der beiden Nutensteine (24) oder Langsschienen (25, 25ₙ) begrenzt ist und nahe der Schraube/n (42) von zu dieser/diesen etwa parallelen Anschlagstegen (22).

6. Baugruppe nach Anspruch 5, dadurch gekennzeichnet, daß in Einbaulage beider Nutensteine (24) oder Längsschienen (25, 25ₙ) deren Anschlagstege (22) zueinander weisen.

7. Baugruppe nach Anspruch 5 oder 6, dadurch gekennzeichnet, daß die Anschlagstege (22) beidseits der Bohrung/en (46) bzw. der Gewindebohrung/en (47) aus dem Kopf (28) des Nutensteins (24) bzw. der Längsschiene (25, 25ₙ) herausgeformt sind.

8. Baugruppe nach wenigstens einem der Ansprüche 1 bis 7, dadurch gekennzeichnet, daß der Einsetzabschnitt des Anschlußprofils (10, 12) eine sich zu ihrer Oberfläche (16) hin querschnittlich beidseits verbreiternde Leiste (14) und diese aus dem Anschlußprofil herausgeformt ist.

9. Baugruppe nach wenigstens einem der Ansprüche 1 bis 8, dadurch gekennzeichnet, daß zumindest die mit den Bohrungen (46) versehene Längsschiene (25, 25ₙ) im Bereich der Bohrungen mit einer äußeren Längsnut (38) od.dgl. Kanal versehen ist.

10. Baugruppe nach Anspruch 9, dadurch gekennzeichnet, daß in die Längsnut (38) der Längsschiene (25, 25ₙ) ein streifenartiges Zusatzprofil (48) oder wenigstens ein Strang eingelegt ist.

11. Baugruppe nach Anspruch 9 oder 10, dadurch gekennzeichnet, daß die Breite der Längsnut (38) etwa der Breite (n) der Schraubenköpfe (40) entspricht.

12. Baugruppe nach Anspruch 9 oder 10, dadurch gekennzeichnet, daß in den Nutengrund (39) der Längsnut (38) Aufnahmeräume (62) für die Köpfe (40) der Schrauben (42) eingelassen sind.

13. Baugruppe nach wenigstens einem der Ansprüche 1 bis 12, dadurch gekennzeichnet, daß die Längsschiene (25, 25ₙ) mit wenigstens einer Dichtlippe versehen ist.

14. Baugruppe nach wenigstens einem der Ansprüche 1 bis 13, dadurch gekennzeichnet, daß die Profile (10, 12, 25, 25ₙ, 48) der Baugruppe aus einer Leichtmetallegierung, insbesondere einer Aluminiumlegierung, aus Kunststoff oder aus einem Leichtmetall/Kunststoff-Verbund bestehen.

15. Baugruppe nach einem der Ansprüche 1 bis 14, dadurch gekennzeichnet, daß in zwischen aneinanderliegenden Profilen (10, 12, 25, 25_{n,} 48) gebildete längslaufende Fugen eine Dichtmasse oder zumindest eine längslaufende Dichtung aus Metall, Gummi oder Kunststoff eingesetzt ist.
